(19) Europäisches Patentamt
European Patent Office
Office européen des brevets

(11) **EP 3 262 611 B1**

(12) **FASCICULE DE BREVET EUROPEEN**

(45) Date de publication et mention
de la délivrance du brevet:
**26.12.2018  Bulletin 2018/52**

(21) Numéro de dépôt: **16701751.6**

(22) Date de dépôt: **26.01.2016**

(51) Int Cl.:
**G06T 11/00** *(2006.01)*      **G06T 7/00** *(2017.01)*

(86) Numéro de dépôt international:
**PCT/EP2016/051546**

(87) Numéro de publication internationale:
**WO 2016/134903 (01.09.2016 Gazette 2016/35)**

(54) **PROCÉDÉ DE SEGMENTATION DE L'IMAGE D'UN OBJET RECONSTRUIT PAR RECONSTRUCTION TRIDIMENSIONNELLE**

VERFAHREN ZUR SEGMENTIERUNG DES BILDES EINES OBJEKTS, DAS DURCH DREIDIMENSIONALE REKONSTRUKTION WIEDERHERGESTELLT WURDE

METHOD FOR SEGMENTING THE IMAGE OF AN OBJECT RECONSTRUCTED BY THREE-DIMENSIONAL RECONSTRUCTION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **24.02.2015  FR 1551548**

(43) Date de publication de la demande:
**03.01.2018  Bulletin 2018/01**

(73) Titulaire: **IFP Energies nouvelles**
**92500 Rueil-Malmaison (FR)**

(72) Inventeurs:
• **MOREAUD, Maxime**
**42800 Saint Martin la Plaine (FR)**
• **WAHL, François**
**69630 Chaponost (FR)**

(74) Mandataire: **IFP Energies nouvelles**
**Rond-point de l'échangeur de Solaize**
**BP3**
**69230 Solaize (FR)**

(56) Documents cités:
• **JOOST BATENBURG K ET AL: "Optimal Threshold Selection for Tomogram Segmentation by Reprojection of the Reconstructed Image", 27 août 2007 (2007-08-27), COMPUTER ANALYSIS OF IMAGES AND PATTERNS; [LECTURE NOTES IN COMPUTER SCIENCE], SPRINGER BERLIN HEIDELBERG, BERLIN, HEIDELBERG, PAGE(S) 563 - 570, XP019067446, ISBN: 978-3-540-74271-5 cité dans la demande figure 1**
• **V.D. Tran: "Reconstruction et segmentation d'image 3D de tomographie électronique par approche "problème inverse"", 14 octobre 2013 (2013-10-14), Université Jean Monnet - Saint-Etienne, Saint-Etienne, XP055237939, cité dans la demande 3.3.1 Opérateurs de projection et rétro-projection simplifiés; page 93 - page 95 figure 3.16 figure 3.17**
• **PEKAR V ET AL: "Fast detection of meaningful isosurfaces for volume data visualization", PROCEEDINGS VISUALIZATION 2001. VIS 2001. SAN DIEGO, CA, OCT. 21 - 26, 2001; [ANNUAL IEEE CONFERENCE ON VISUALIZATION], NEW YORK, NY : IEEE, US, 21 octobre 2001 (2001-10-21), pages 223-227, XP002246128, DOI: 10.1109/VISUAL.2001.964515 ISBN: 978-0-7803-7200-9**

**(Cont. page suivante)**

EP 3 262 611 B1

- **VAN AARLE W ET AL: "Threshold Selection for Segmentation of Dense Objects in Tomograms", 1 décembre 2008 (2008-12-01), ADVANCES IN VISUAL COMPUTING, SPRINGER BERLIN HEIDELBERG, BERLIN, HEIDELBERG, PAGE(S) 700 - 709, XP019112126, ISBN: 978-3-540-89638-8 page 701, alinéa 4 - alinéa 5 page 708, alinéa 2**
- **PORIKLI FATIH: "Integral Histogram: A Fast Way To Extract Histograms in Cartesian Spaces", PROCEEDINGS / 2005 IEEE COMPUTER SOCIETY CONFERENCE ON COMPUTER VISION AND PATTERN RECOGNITION, CVPR 2005 : [20 - 25 JUNE 2005, SAN DIEGO, CA], IEEE, PISCATAWAY, NJ, USA, vol. 1, 20 juin 2005 (2005-06-20), pages 829-836, XP010817358, DOI: 10.1109/CVPR.2005.188 ISBN: 978-0-7695-2372-9**

**Description**

La présente invention concerne le domaine de la reconstruction tridimensionnelle d'un objet à partir de mesures externes à l'objet, comme par exemple dans le cadre de la tomographie électronique.

Le terme de tomographie désigne l'ensemble des méthodes de reconstruction exactes, ou le plus souvent approchées, de l'intérieur d'un objet à partir de mesures effectuées à l'extérieur de cet objet. Ces mesures, appelées projections par les spécialistes dans le domaine, sont liées à l'absorption par l'objet considéré d'une énergie émise par une source. Souvent, ces mesures sont effectuées par l'intermédiaire d'un capteur, et réalisées sous différents angles de mesure autour de l'objet considéré. Les sources utilisées peuvent être de plusieurs types : rayons X, rayons Gamma, ou encore électrons pour la tomographie électronique.

Dans le domaine du raffinage pétrochimique, la reconstruction tridimensionnelle est utilisée pour caractériser les supports de catalyseurs. En effet, les mesures morphologiques de particules permettent de remonter aux spécificités physico-chimiques des matériaux étudiés. A l'aide par exemple d'un MET (Microscopie Electronique en Transmission), on réalise une série de projections, à intervalles angulaires réguliers. Puis une méthode de reconstruction tomographique est mise en oeuvre, par exemple par une approche de type problème inverse afin d'obtenir une image du support considéré.

La reconstruction tridimensionnelle peut aussi être utilisée dans le domaine de l'exploration et de l'exploitation pétrolière, pour la caractérisation des matériaux poreux. En effet, cette technique permet d'avoir accès au réseau poreux interne d'un échantillon de roche, et par conséquent de pouvoir caractériser très précisément celui-ci. Ainsi, cette technique peut permettre d'accéder à des informations très importantes pour la caractérisation d'une roche réservoir, telles que sa porosité (densité de pores dans l'échantillon), ou encore sa perméabilité (connectivité des pores entre eux, potentiellement préférentielle dans une direction).

Mais la reconstruction tridimensionnelle d'un objet peut concerner des domaines très divers : la caractérisation des matériaux en général, le contrôle non destructif, ou encore l'imagerie médicale.

L'objet reconstruit, ou image de l'objet, est alors présenté sous la forme d'une maquette, généralement représentée sur ordinateur, via des niveaux d'intensité, chaque niveau d'intensité reflétant un constituant de l'objet. Par exemple dans le cas d'un support de catalyseur, des niveaux d'intensité pourront représenter le vide et d'autres la matière du support. Pour les roches, chaque constituant chimique peut être représenté par des niveaux d'intensité. Les niveaux d'intensité sont classiquement représentés en utilisant une palette de couleur en noir et blanc, conduisant à en une représentation en dégradés de gris. Le spécialiste peut alors chercher à simplifier cette information, afin de permettre des caractérisations de type morphologique ou géométrique (volume, aire, surface spécifique, longueur). On entend par simplification, une réduction, sans intervention d'un opérateur, du nombre de niveaux d'intensité représentant l'objet reconstruit. Typiquement, un objet reconstruit est représenté par plusieurs milliers de niveaux d'intensité, que l'on souhaite simplifier en deux ou trois niveaux ou classes. Par exemple, dans le cas de l'estimation du volume poreux d'une roche, on pourra avantageusement simplifier l'image reconstruite de l'échantillon de roche considéré en deux classes, l'une correspondant au vide et l'autre correspondant à tout constituant de la roche. Une étape de simplification peut être aussi mise en oeuvre dans le cas où l'image de l'objet comporte des intensités non entières, que l'on va regrouper en un nombre raisonnable de classes d'intensités entières. Dans le domaine technique considéré, on parle de segmentation pour désigner cette étape de simplification. La segmentation consiste donc à déterminer des seuils d'intensité, délimitant des classes d'intensité représentatives d'une propriété que l'on souhaite mettre en évidence.

A noter qu'une étape de segmentation peut être aussi mise en oeuvre sur une image numérique d'un objet : la projection est alors calculée numériquement, à partir de l'image, et non obtenue par des mesures expérimentales.

**État de la technique**

Les documents suivants seront cités au cours de la description :

[Batenburg et al. 2007] K. J. Batenburg et J. Sijbers. "Optimal threshold selection for tomogram segmentation by reprojection of the reconstructed image", in: Computer Analysis of Images and Patterns, in: Lecture Notes in Computer Science, vol. 4673, Springer, Berlin/Heidelberg, 563-570, 2007.
[Batenburg et al. 2009] K.J. Batenburg et J. Sijbers. "Adaptive thresholding of tomograms by projection distance minimization". Pattern Récognition, 42(10), 2297-2305, 2009.
[Doan D. H. et al., 2013]: Hong Doan Dinh, Pierre Delage, Jean-François Nauroy, Anh-Minh Tang, Youssef Souhail, Microstructural characterization of a Canadian oil sand, Canadian Geotechnical Journal. 01/2013; 49(10).
[Gilbert 1972] Gilbert P., Iterative methods for the three-dimensional reconstruction of an object from projections. Journal of Theorical Biology, 36(1) :105-117.
[Huang et al. 1995] L.K. Huang et M.J. Wang, Image thresholding by minimizing the measure of fuzziness, Pattern Récognition, 41-51, 1995.

[Kapur et al. 1985] J.N. Kapur, P.K. Sahoo, A.K.C. Wong. "A new method for gray-level picture thresholding using the entropy of the histogram", Computer Vision, Graphics, and Image Processing, 29(3), 273-285, 1985.

[Lei et al. 2008] Lei He, Zhigang Peng, Bryan Everding, Xun Wang, Chia Y. Han, Kenneth L. Weiss, William G. Wee, A comparative study of deformable contour methods on medical image segmentation, Image and Vision Computing, Volume 26, Issue 2, 1 February 2008, Pages 141-163.

[Mesanovic et al. 2013] Nihad Mesanovis, Haris Huseinagic, Samir Kamenjakovic, Automatic Region Based Segmentation and Analysis of Lung Volumes from CT Images, International Journal of Computer Science and Technology, vol. 4, Issue special, 2013.

[Moreaud et al. 2008] M. Moreaud, B. Celse, F. Tihay, Analysis of the accessibility of macroporous alumino-silicate using 3D-TEM images. Material Science and Technology 2008 conference, Pittsburgh USA.

[Otsu 1979] N. Otsu. "A threshold selection method from gray level histograms". IEEE Trans. Systems, Man and Cybernetics 9, 62-66, 1979.

[Stawiaski, 2008] Jean Stawiaski, Morphologie mathématique et graphes : application à la segmentation interactive d'images médicales, thèse, Ecole des Mines de Paris, 2008.

[Tran et al. 2013] VD Tran, M Moreaud, É Thiébaut, L Denis, JM Becker, Inverse problem approach for the alignment of electron tomographic series, Oil & Gas Science and Technology-Revue d'IFP Energies nouvelles 69 (2), 279-291.

[Tran 2013] V.D. Tran, Reconsutrction et segmentation d'image 3D de tomographie électronique par approche « problème inverse », Thèse, Université de Saint Etienne, 2013.

[Xu et al. 1996] L. Xu et M.I. Jordan, "On Convergence Properties of the EM Algorithm for Gaussian Mixture", Neural Computation, 8, 129-151, 1996.

La simplification, ou segmentation, des données volumiques sans aucune intervention manuelle s'effectue classiquement avec des approches globales utilisant un histogramme (non cumulé) de l'image reconstruite, comme par exemple : la maximisation de la variance interclasse [Otsu 1979], la maximisation de l'entropie [Kapur et al. 1985], l'ajustement des distributions gaussiennes multiples à l'histogramme [Xu et al. 1996], les méthodes des nuées dynamiques (ou k-moyennes) [Huang et Wang 1995]. Il est également possible d'utiliser des approches locales de type contours actifs [Lei et al. 2008], croissance de région [Mesanovic et al. 2013], ou encore issue de la morphologique mathématique utilisant un opérateur de ligne de partage des eaux [Stawiaski, 2007]. Ces approches peuvent être totalement automatiques, semi-automatiques, ou guidées par l'utilisateur. Leur inconvénient majeur réside dans le fait que ces méthodes utilisent en entrée l'objet reconstruit, qui est une approximation du vrai objet, comportant des erreurs. Ces méthodes ne sont donc pas directement reliées aux informations initiales sur l'objet étudié que sont les projections.

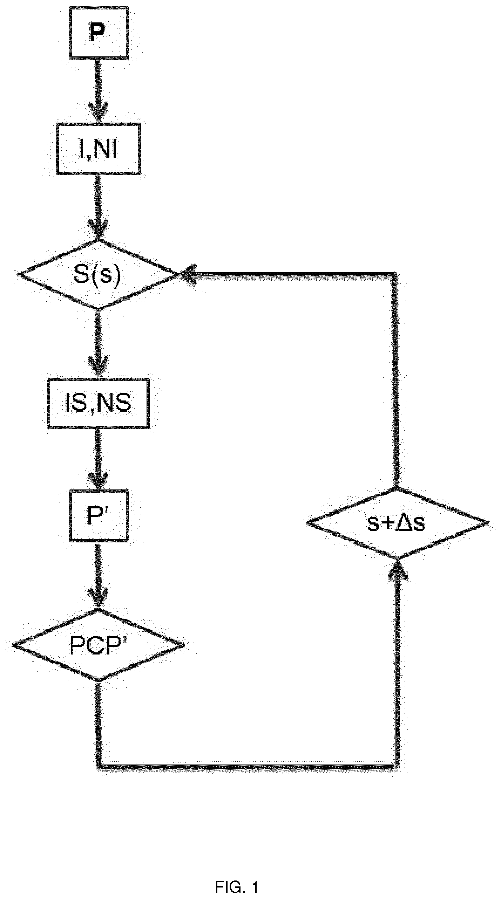

Pour pallier ce problème, une méthode spécifique pour la tomographie, basée sur une optimisation globale, a été récemment proposée par [Batenburg et al. 2007], puis par [Tran 2013]. Le principe consiste à déterminer les valeurs des seuils d'intensité minimisant, via une méthode d'optimisation itérative, la différence entre les projections réelles P (c'est-à-dire les projections réellement enregistrées par les outils de mesure de projections) et celles calculées à partir de l'objet reconstruit, puis segmenté. Cette méthode est connue par le spécialiste comme la méthode de minimisation de la distance aux projections. La Figure 1 présente le principe de cette méthode : à partir de projections réelles P, on reconstruit une image I de l'objet étudié comportant NI niveaux intensités, par exemple par reconstruction tomographique ; puis à partir de valeurs de seuils d'intensité s prédéfinies, on calcule, par une méthode de segmentation S, une image segmentée IS de cette image reconstruite I, comportant NS classes d'intensité. On calcule ensuite des projections P' à partir de cette image segmentée IS. Puis, on réalise une comparaison PCP' entre les projections réelles P et des projections calculées P' sur l'image segmentée IS ; on met alors à jour les valeurs de seuils d'intensité s, jusqu'à ce que les projections réelles P et les projections calculées P' soient le plus proches possibles, c'est-à-dire jusqu'à ce que leur différence soit inférieure à un seuil prédéfini.

Cette méthode, si elle permet de travailler sur les informations initiales sur l'objet étudié, est très consommatrice en temps de calcul. En effet, pour chaque itération du processus d'optimisation, c'est-à-dire à chaque mise à jour s+Δs des valeurs de seuils d'intensité, il faut recalculer les projections P' de l'objet reconstruit segmenté.

La présente invention vise à réduire les temps de calculs pour obtenir un objet simplifié par la méthode de minimisation de la distance aux projections. Pour ce faire, la présente invention repose sur un pré-calcul des projections calculées P', réalisé une seule fois, permettant d'éviter le calcul des projections calculées P' à chaque itération d'un processus d'optimisation.

**Le procédé selon l'invention**

Ainsi, la présente invention concerne un procédé pour la segmentation d'une image d'un objet représentée par un nombre fini de niveaux d'intensité, ladite étant une image tomographique ayant été reconstruite à partir de mesures externes à l'objet et acquises selon différents angles pris par rapport à une référence. A partir d'un nombre prédéfini de seuils d'intensité de ladite image, le procédé comporte les étapes suivantes pour au moins un desdits angles :

a) on détermine, pour ledit angle, une distribution représentative de la répartition desdits niveaux d'intensités de ladite image, ladite distribution étant un histogramme cumulé desdits niveaux d'intensités rencontrés dans ladite image selon une direction prédéterminée dans ladite image, ladite direction prédéterminée étant la même pour chacun desdits angles ;

b) on détermine les valeurs desdits seuils d'intensité en minimisant une fonction objectif estimant la différence entre ladite mesure pour ledit angle et une mesure simulée pour ledit même angle, ladite mesure simulée étant fonction desdites valeurs desdits seuils et de ladite distribution ;

c) on segmente ladite image par regroupement desdits niveaux d'intensité en classes d'intensité délimitées par lesdites valeurs desdits seuils.

Avantageusement, ladite direction prédéterminée peut être une droite parallèle à l'un des axes horizontaux de ladite image.

Selon un mode de réalisation de l'invention, lesdites mesures peuvent avoir été acquises dans le cadre d'une géométrie d'acquisition parallèle et ledit histogramme cumulé peut être déterminé sur une rotation de ladite image selon ledit angle.

Selon un mode de mise en oeuvre de la présente invention, on peut calculer ladite mesure simulée $P'_A$ pour un desdits angles A selon une formule du type :

$$P'_A = f(T_A(s_1), ..., T_A(s_n), ..., T_A(s_{NS}))$$

où $f$ est une combinaison linéaire, NS est ledit nombre prédéfini desdits seuils d'intensité, et $T_A(s_n)$ est l'ensemble des éléments dudit histogramme cumulé représentatifs du nombre desdits niveaux d'intensité de ladite image inférieurs à une valeur de seuil $s_n$, ledit histogramme étant calculé pour ledit angle A.

Selon un mode de mise en oeuvre de la présente invention, on peut déterminer une intensité représentative pour chacune desdites classes délimitées par lesdites valeurs desdits seuils.

Selon un mode de mise en oeuvre de la présente invention, ladite intensité représentative de la dite classe peut être la valeur d'un desdits seuils délimitant ladite classe, une moyenne desdites valeurs desdits seuils délimitant ladite classe, ou toute combinaison linéaire desdites valeurs desdits seuils délimitant ladite classe.

Selon un mode de réalisation de l'invention, on peut appliquer les étapes a) et b) pour chacun desdits angles de mesure et on peut déterminer des valeurs de seuils représentatives de l'ensemble desdits angles en choisissant soit la médiane, soit une combinaison desdites valeurs desdits seuils déterminés pour chacun desdits angles de mesure.

Selon un autre mode de réalisation de l'invention, on peut déterminer des valeurs de seuils représentatives de l'ensemble desdits angles de mesure en minimisant une fonction objectif estimant les différences entre lesdites mesures et lesdites mesures simulées pour l'ensemble desdits angles de mesure.

De plus, l'invention concerne une utilisation du procédé selon l'invention pour la caractérisation des supports de catalyseurs dans le domaine du raffinage pétrochimique.

En outre, l'invention concerne une utilisation du procédé selon l'invention pour la caractérisation des milieux poreux dans le domaine de l'exploration et de l'exploitation pétrolière.

Par ailleurs, l'invention concerne une utilisation du procédé selon l'invention pour la caractérisation de matériaux, pour le contrôle non destructif d'un objet, ou pour l'imagerie médicale.

En outre, l'invention concerne un produit programme d'ordinateur téléchargeable depuis un réseau de communication ou enregistré sur un support lisible par ordinateur, et exécutable par un processeur, comprenant des instructions de code de programme pour la mise en oeuvre du procédé selon l'une des revendications précédentes, lorsque ledit programme est exécuté sur un ordinateur.

## Présentation succincte des Figures

D'autres caractéristiques et avantages du procédé selon l'invention, apparaîtront à la lecture de la description ci-après d'exemples non limitatifs de réalisations, en se référant aux figures annexées et décrites ci-après.

La Figure 1 présente un schéma du principe de la méthode segmentation par minimisation de la distance aux projections.

Les Figures 2A à 2F présentent le principe, selon l'invention, du calcul d'une distribution représentative de la répartition des niveaux d'intensité dans une image selon une ligne horizontale, ladite distribution étant un histogramme cumulé.

Les Figures 3A à 3C présentent des résultats obtenus par le procédé selon l'invention.

**Description détaillée du procédé**

Les définitions suivantes sont utilisées au cours de la description de l'invention :

- *projections* : dans le domaine de la reconstruction tridimensionnelle, il s'agit de mesures déportées à l'extérieur de l'objet et acquises selon différents angles de mesures pris par rapport à une référence. Ces mesures résultent de l'émission d'une énergie émise par une source, partiellement absorbée par l'objet étudié, l'énergie restante étant enregistrée par un capteur. Les sources utilisées peuvent être de plusieurs types : rayons X, rayons Gamma, ou encore électrons pour la tomographie électronique. Ces mesures sont généralement répétées pour différents angles de mesures pris par rapport à une référence. En tomographie par rayons X, il est courant d'utiliser 720 projections, à 360° autour de l'objet, par incrément de 0.5°. En tomographie électronique, les projections sont réalisées de -70° et +70°, par incrément de 1°.
- *reconstruction tridimensionnelle:* il s'agit d'une technique permettant de construire l'image volumique d'un objet à partir de projections de cet objet réalisées sous différents angles de mesure. La reconstruction conduit à une image représentée par un nombre fini de niveaux d'intensité, chaque niveau correspondant à un constituant de l'objet. En général, un constituant est représenté par plusieurs niveaux d'intensité. Plus d'informations concernant la reconstruction tridimensionnelle peuvent être trouvées dans [Doan D. H. et al., 2013].
- géométrie d'acquisition parallèle/non parallèle: il s'agit de la géométrie de rayonnement de la source d'un dispositif d'acquisition de projections. On parle de géométrie non parallèle ou encore conique lorsque la source émet à partir d'un point et que les rayons traversant l'objet ne sont pas parallèles. On parle de géométrie parallèle lorsque la source émet des rayons tous parallèles à partir d'une surface finie et que ces rayons traversent l'objet selon la même direction ; c'est le cas par exemple de la tomographie électronique.
- *classe d'intensité :* il s'agit d'un regroupement de plusieurs niveaux d'intensité délimités par au moins un seuil et caractérisés par une intensité représentative des valeurs d'intensité de la classe. Par exemple, une classe peut regrouper les valeurs d'intensité inférieures à un seuil donné, les valeurs d'intensité supérieures à un autre seuil, ou les valeurs comprises entre deux seuils. L'intensité représentative d'une classe donnée peut correspondre à la moyenne des valeurs d'intensité de la classe considérée, à la médiane, à l'un des seuils caractérisant la classe, ou encore être définie par tout autre calcul.
- *segmentation* : la segmentation d'une image représentée par un nombre fini de niveaux d'intensité consiste à regrouper les niveaux d'intensité en question en classes d'intensité.

L'objet de la présente invention est un procédé de segmentation de l'image d'un objet représentée par un nombre fini de niveaux d'intensité. Selon l'invention, l'image considérée a été reconstruite à partir de mesures externes à l'objet et acquises selon différents angles pris par rapport à une référence, qui peut être un axe vertical. Par la suite et conformément à l'usage dans le domaine, ces mesures sont appelées projections. L'objet de l'invention vise à regrouper les niveaux d'intensité en un nombre prédéfini de classes d'intensité, et ce, en déterminant, de manière automatique, rapide, et en tenant compte des projections, les valeurs des seuils d'intensité délimitant les classes en question.

Préalablement à sa mise en oeuvre, le procédé selon l'invention peut requérir la réalisation des deux étapes suivantes :

**1. acquisition des projections**

Il s'agit ici d'acquérir les données d'entrée en vue de la reconstruction tridimensionnelle d'un objet. Le spécialiste a une parfaite connaissance des techniques d'acquisition de projections associées à un objet.

Dans le cadre de la reconstruction tridimensionnelle par tomographie électronique, on peut obtenir ce type de projections en utilisant un Microscope Electronique en Transmission (MET en français, TEM en anglais pour Transmission Electron Microscopy). Le MET comporte un canon à électrons qui envoie un faisceau parallèle d'électrons de haute énergie sur un objet disposé sur un porte-objet. L'objet disperse alors les électrons qui le traverse ; le faisceau sortant est ensuite refocalisé, puis enregistré par un capteur. Le signal enregistré est appelé projection ; il sera noté P dans la suite. Cette opération est répétée en inclinant le porte-objet du microscope selon différents angles par rapport au faisceau d'électrons (typiquement de -70° à +70° avec un incrément de 1°). On obtient ainsi des projections $P_A$ pour NA d'angles de mesures A. Ainsi, les projections contiennent l'information volumique sur un objet, projetée sur un plan. Le MET permet d'obtenir des informations sur un objet à l'échelle de quelques nanomètres à l'angström.

Classiquement, les projections peuvent être également acquises par rayons X, rayons gamma ou analogues.

**2. reconstruction tridimensionnelle**

Il s'agit ici, à partir des projections $P_A$ acquises à l'étape précédente pour différents angles de mesure A, de reconstruire l'image tridimensionnelle, c'est-à-dire volumique, d'un objet. Le spécialiste a une parfaite connaissance de techniques de reconstruction tridimensionnelle d'un objet. La reconstruction peut être réalisée par plans de coupes successifs, puis le volume reconstruit final est obtenu par superposition des coupes reconstruites. Une méthode particulière de reconstruction tomographique est par exemple décrite dans [Tran et al. 2013]. On peut également citer la méthode SIRT [Gilbert, 1972], couramment utilisée dans le domaine. La résolution de l'image de l'objet obtenue par reconstruction tridimensionnelle dépend notamment de la qualité de l'échantillonnage en angles de mesure (gamme d'angles de mesure considérée, et incrément entre les mesures). Ainsi, plus la couverture angulaire est complète et plus l'incrément angulaire est petit, plus l'image de l'objet reconstruit est précise, c'est-à-dire plus l'image de l'objet est proche de l'objet réel. Dans le cadre de projections obtenues par MET, il est nécessaire au préalable d'appliquer une correction aux projections, en raison d'un déplacement de l'objet dans le porte-objet lors des mesures angulaires successives.

A partir d'un nombre de seuils d'intensité prédéfini par le spécialiste, la présente invention comporte au moins les étapes suivantes pour un angle de mesure donné :

1. **Calcul d'une distribution représentative de la répartition des niveaux** d'intensité : au cours de cette étape, on détermine, pour ledit angle, une distribution représentative de la répartition desdits niveaux d'intensités de ladite image selon une direction prédéterminée dans ladite image ;

2. **Estimation des valeurs des seuils d'intensité** : au cours de cette étape, on détermine la valeur des seuils d'intensité en minimisant une fonction objectif estimant la différence entre ladite mesure pour ledit angle et une mesure simulée pour ledit même angle, ladite mesure simulée étant fonction de la valeur desdits seuils et de ladite distribution ;

3. **Segmentation de l'image** : au cours de cette étape, on segmente ladite image par regroupement desdits niveaux d'intensité en classes délimitées par lesdites valeurs de seuil.

A des fins de simplification, les principales étapes du procédé selon l'invention sont présentées dans le cas de l'image d'un objet bidimensionnel, mais le même principe peut être aisément mis en oeuvre en trois dimensions par un spécialiste. Ainsi, par la suite, on considère une image I d'un objet en deux dimensions, de taille W x H, constituée de NI niveaux d'intensité. Un élément I(i,j) (ou maille) de l'image I est un élément situé au croisement de la $i^{ème}$ colonne de I et de la $j^{ème}$ ligne de I, avec i variant entre 1 et W et j variant entre 1 et H. Un élément I(i,j) de l'image I contient une valeur d'intensité donnée. L'image I a été obtenue par reconstruction tridimensionnelle à partir de projections $P_A$ de l'objet réalisées sous un nombre NA d'angles de mesure A différents.

Par ailleurs, les principales étapes du procédé selon l'invention sont présentées ci-après dans le cas de la segmentation d'une image I en NS+1 classes d'intensité, c'est-à-dire dans le cas général où l'on cherche à déterminer un nombre NS de valeurs de seuils d'intensité, le nombre NS de seuils étant un entier supérieur ou égal à 1, prédéfini par le spécialiste.

Les principales étapes de la présente invention sont détaillées ci-après.

**1) Calcul d'une distribution représentative de la répartition des niveaux d'intensité**

Au cours de cette étape, il s'agit de calculer une distribution représentative de la répartition des niveaux d'intensité rencontrés dans l'image I selon une direction prédéterminée.

Selon un mode préféré de réalisation de la présente invention, ladite distribution est l'histogramme cumulé T des niveaux d'intensités rencontrés dans l'image I selon une direction prédéterminée. Selon un mode de réalisation de la présente invention, la direction prédéterminée est une droite horizontale dans l'image I.

Selon un mode de réalisation de la présente invention, on calcule un histogramme cumulé $T_A$ pour chacun des NA angles de mesure.

Selon un mode de réalisation pour lequel les projections ont été acquises via une géométrie d'acquisition parallèle, le calcul d'un histogramme cumulé $T_A$ pour un angle A donné peut se dérouler selon les deux sous-étapes suivantes :

**1.1 Calcul d'une rotation I' de l'image I selon l'angle A :**

Il s'agit, dans un premier temps, de calculer une rotation I' de l'image I pour l'angle de mesure A considéré. L'image I' obtenue après rotation de l'image I a les mêmes dimensions que l'image I.

Selon un mode de réalisation de la présente invention, la rotation I' d'une image I selon un angle A peut être réalisée de la façon décrite ci-après. Chaque point $I'(i',j')$ de l'image après rotation I' est obtenu à partir d'un point $I(i,j)$

de l'image I par la relation suivante :

$$I'(i', j') = I(i, j)$$

avec

$$i = (i' - ic).\cos(A) - (j' - jc).\sin(A) + ic \;,$$

$$j = (i' - ic).\sin(A) + (j' - jc).\cos(A) + jc$$

et (*ic,jc*) sont les coordonnées du centre de l'image I.

Selon un mode de réalisation de la présente invention, lorsque les coordonnées (*i,j*) ne sont pas entières, on a recours à une interpolation pour estimer la valeur *I(i,j)* de l'image I au point (*i,j*). Selon un mode de mise en oeuvre de l'invention, l'interpolation utilisée peut être bilinéaire, ou faire intervenir des fonctions B-spline, préférentiellement cubiques. Si l'on note *Interpolation*() la fonction d'interpolation choisie, *ceil*() une fonction qui associe, à un nombre réel, l'entier immédiatement supérieur, et *floor*() une fonction qui associe, à un nombre réel, l'entier immédiatement inférieur, l'expression de la valeur *I(i,j)* de l'image I au point(*i,j*) peut être donnée de la façon suivante :

$$I(i, j)$$
$$= Interpolation(I(ceil(j), ceil(i)), I(ceil(j), floor(i)), I(floor(j), ceil(i), I(floor(j), floor(j))$$

### 1.2 Calcul d'un histogramme cumulé T des niveaux d'intensité sur l'image I'

Puis, dans un deuxième temps, on procède au calcul de l'histogramme cumulé $T_A$ des niveaux d'intensité rencontrés, c, dans l'image I' obtenue après rotation de l'image I.

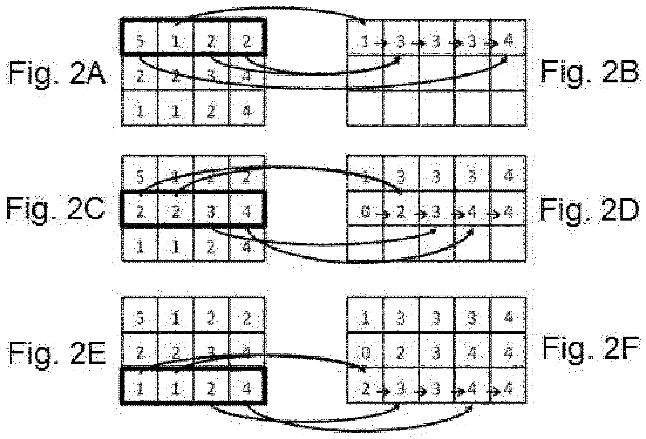

Selon un mode préférentiel de mise en oeuvre de l'invention, la direction privilégiée est une droite parallèle à l'une des lignes j de l'image I', et on calcule alors le cumul des intensités le long d'une ligne j de cette image. On définit ainsi un histogramme cumulé de dimension NI x H, et un élément $T_A$(i, j) de l'histogramme cumulé contient le nombre de mailles de la ligne j de l'image après rotation I' dont l'intensité est inférieure ou égale à i. Un exemple d'histogramme des intensités cumulées est donné en Figure 2. Les Figures 2A et 2B montrent le mécanisme de remplissage de la première ligne de l'histogramme cumulé, les Figures 2C et 2D le mécanisme de remplissage de la seconde ligne et les Figures 2E et 2F le mécanisme de remplissage de la troisième ligne. Les Figures 2A, 2C, et 2E présentent les valeurs d'intensité de l'image I', composée de 3 lignes, 4 colonnes et de 5 niveaux d'intensité entiers variant de 1 à 5. Les Figures 2B, 2D, et 2F présentent les valeurs contenues dans l'histogramme cumulé constitué de 3 lignes et 5 colonnes (correspondant aux 5 niveaux d'intensité) après remplissage respectivement de la première, de la deuxième et de la troisième ligne. On passe par exemple de la Figure 2A à la Figure 2B de la façon suivante : pour remplir l'élément $T_A$(1,1), on compte le nombre de fois où apparaissent des valeurs d'intensité inférieures ou égales à 1 dans la première ligne de I' ; puis on remplit l'élément $T_A$(2,1) en comptant le nombre de fois où apparaissent des valeurs d'intensité inférieures ou égales à 2 dans la première ligne de l'image I', et on répète un tel mécanisme pour l'élément $T_A$(3,1), $T_A$(4,1) et $T_A$(5,1).

Ce pré-calcul est très rapide et est réalisé en un seul balayage de toutes les mailles de l'image I' obtenue après rotation de l'image I. De plus, l'histogramme cumulé résultant est organisé en fonction de seuils possibles pour l'image I' puisque un élément $T_A$(i,j) renseigne directement sur les mailles de la ligne j de l'image I' dont les valeurs sont au plus égales à la valeur de seuil i.

De façon générale, on définit par $T_A(s_n)$ l'ensemble des éléments de l'histogramme cumulé représentatifs du nombre de niveaux d'intensité de l'image I' inférieurs à une valeur de seuil *sn*. Dans le cas d'une image 2D et dans le cas où ladite direction privilégiée est une droite parallèle à l'une des lignes j de l'image I', $T_A(s_n)$ correspond à la $s_n$*ième* colonne de l'histogramme cumulé $T_A$. Dans le cas d'une image 3D, $T_A(s_n)$ peut correspondre à un plan dans l'histogramme cumulé $T_A$.

Selon un mode de réalisation de la présente invention pour lequel les projections ont été acquises via une géométrie d'acquisition non parallèle, on définit une matrice de projection fonction de l'angle de mesure A considéré et mettant en relation chaque point de l'image I avec un élément de l'histogramme cumulé $T_A$. Puis on parcourt chaque point de l'image I pour remplir l'histogramme cumulé $T_A$ de la même façon que dans le cas de la géométrie d'acquisition parallèle décrit précédemment.

**2) Estimation des valeurs des seuils d'intensité**

Au cours de cette étape, il s'agit de déterminer de façon automatique un nombre NS de valeurs de seuils d'intensité d'une image I, le nombre NS de seuils étant un entier supérieur ou égal à 1, prédéfini par le spécialiste. Selon l'invention, ce problème est résolu en cherchant les NS valeurs de seuils permettant de minimiser une fonction objectif F mesurant au moins la différence entre la projection P réelle selon l'angle A et la projection $P_A$' simulée pour ledit angle A et calculée à partir de la distribution représentative des niveaux d'intensités dans l'image I.

Selon un mode de réalisation de la présente invention, on calcule une projection $P'_A$ d'angle A simulée à partir de l'histogramme cumulé $T_A$ d'angle A calculé dans un mode de réalisation de l'étape précédente selon une formule du type :

$$P'_A = f(T_A(s_1), \ldots, T_A(s_n), \ldots, T_A(s_{NS}))$$

où f est une combinaison linéaire, $T_A(s_n)$ est l'ensemble des éléments de l'histogramme cumulé $T_A$ d'angle A représentatifs du nombre de niveaux d'intensité de l'image I au plus égales à un seuil $s_n$, avec n variant de 1 à NS.

Selon un mode de réalisation de la présente invention, on calcule la projection $P'_A$ d'angle A simulée à partir de l'histogramme cumulé $T_A$ d'angle A calculé dans un mode de réalisation de l'étape précédente de la façon suivante:

- dans le cas d'un seul seuil $s_1$ (cas où NS=1) :

$$P'_A(j) = c_1^* . T_A(j, s_1) + c_2^* . (W - T_A(j, s_1))$$

où $c_1^*$ et $c_2^*$ sont les intensités représentatives des deux classes délimitées par le seuil $s_1$;
- dans le cas de deux seuils $s_1$ et $s_2$, avec $s_1 < s_2$ (cas où NS=2) :

$$P'_A(j) = c_1^* . T_A(j, s1) + c_2^* . [T_A(j, s2) - T_A(j, s1)] + c_3^* . [W - T_A(j, s2)]$$

où $c_1^*$, $c_2^*$ et $c_3^*$ sont les intensités représentatives des trois classes délimitées par les seuils $s_1$ et $s_2$ ;
- dans le cas de NS seuils $s_1$ à $s_{NS}$, avec $s_n < s_{n+1}$ et n variant de 1 à NS :

$$P'_A(j) = c_1^* . T_A(j, s_1) + c_2^* . [T_A(j, s_2) - T_A(j, s_1)] + \ldots + c_{i+1}^* . [T_A(j, s_{n+1}) - T_A(j, s_n)]$$
$$+ \ldots + c_{NS+1}^* . [W - T_A(j, s_{NS})]$$

où $c_1$ à $c_{N+1}$ sont les intensités représentatives des NS+1 classes délimitées par les seuils $s_1$ à $s_{NS}$.

Selon un mode de réalisation de la présente invention, on utilise une méthode des moindres carrés pour déterminer les NS seuils d'intensité recherchés pour une projection $P_A$ d'angle A donnée. Plus précisément, on détermine les NS seuils d'intensité pour une projection $P_A$ d'angle A donnée qui minimise une différence entre la projection $P_A$ effectivement mesurée et la projection $P'_A$ simulée tel que précédemment décrit. La fonction objectif décrivant ce problème inverse peut alors s'écrire de la façon suivante :

$$F = \sum_{j=1}^{H} \left( P'_A(j) - P_A(j) \right)^2 \qquad\qquad (1)$$

La fonction objectif ainsi définie est non linéaire par rapport aux seuils d'intensité. Par conséquent, il n'existe pas de méthode directe pour obtenir les valeurs des seuils d'intensité recherchés.
Selon un mode de réalisation de la présente invention, on détermine les valeurs de seuil d'intensité optimales par une méthode d'essais et erreurs. Cela signifie que l'on évalue la fonction objectif pour différentes combinaisons de valeurs des NS seuils, et on conserve la combinaison de valeurs des NS seuils conduisant à une valeur de la fonction objectif minimale. L'utilisation d'une méthode essais et erreurs peut être avantageusement utilisée dans le cas où seuls 1 ou 2 seuils sont à déterminer. Ainsi, dans le cas d'un seul seuil s1, on peut tester toutes les valeurs de seuils possibles et garder celle pour laquelle la fonction objectif est minimale. Dans le cas de 2 seuils s1 et s2, on peut fixer par exemple une valeur pour s1, puis faire varier s2 par toutes les valeurs possibles sauf celle prise par s1, et calculer la valeur de la fonction objectif pour chaque couple (s1, s2) ; puis on répète ce processus pour toutes les valeurs possibles de s1. Les valeurs de seuils retenues pour une segmentation optimale de l'image de l'objet considéré sont alors celles de la combinaison (s1, s2) offrant une valeur de fonction objectif minimale. La possibilité de tester un grand nombre de combinaisons possibles pour les valeurs des NS seuils recherchés par une méthode d'essais et erreurs est rendue possible grâce au pré-calcul basé sur l'estimation d'une distribution représentative des intensités tel que défini à l'étape précédente. En effet, ce pré-calcul est effectué une seule fois, et l'expression de la projection simulée P'A en fonction de ce pré-calcul permet d'avoir un accès rapide aux projections simulées P'A, pour toute combinaison de valeurs de seuils, contrairement à l'art antérieur qui doit simuler numériquement des projections P'A (ce qui coûteux en temps de calcul), et ce, qui plus est, à chaque itération du processus d'optimisation, (c'est-à-dire à chaque combinaison de seuils testée).

Selon un autre mode de réalisation de la présente invention, on a recours à une méthode de minimisation de la fonction objectif basée sur une approche itérative. Plus précisément, on utilise une méthode qui, à partir d'une fonction objectif calculée sur un modèle initial (ici une valeur initiale pour chacun des NS seuils), va modifier ce modèle (c'est-à-dire les valeurs des NS seuils), itération après itération, jusqu'à trouver un minimum de la fonction objectif. De nombreux algorithmes de minimisation de fonction objectif sont connus du spécialiste, tels que la méthode de Gauss-Newton, la méthode de Newton-Raphson ou encore le gradient conjugué.

Selon un mode de mise en oeuvre de la présente invention, une fois les NS seuils déterminés, on peut calculer les NS+1 intensités représentatives de chacune des NS+1 classes induites par les NS seuils de la façon suivante :

$$\begin{pmatrix} c_1^* \\ ... \\ c_{NS+1}^* \end{pmatrix} = \left( {}^t X X \right)^{-1t} XP \ ,$$

la matrice X étant calculée de la façon suivante :

- dans le cas d'un seul seuil $s_1$ :

$$X = W \big[ T(j,s)/W, 1 - T(j,s)/W \big]$$

- dans le cas de deux seuils $s_1$ et $s_2$ :

$$X = W \big[ T(j,s_1)/W, T(j,s_2)/W - T(j,s_1)/W, 1 - T(j,s_2)/W \big]$$

- dans le cas de NS seuils $s_1$ à $s_{NS}$ :

$$X = W \big[ T(j,s_1)/W, T(j,s_2)/W - T(j,s_1)/W, ..., T(j,s_{i+1})/W - T(j,s_i)/W, ..., 1 - T(j,s_n)/W \big]$$

A la fin du processus de minimisation, on obtient NS valeurs pour les NS seuils d'intensité recherchés, ainsi que les NS+1 valeurs des intensités représentatives des NS+1 classes délimitées par les NS seuils d'intensité.

Selon un mode de réalisation de la présente invention, on calcule des valeurs de seuils d'une image d'un objet indépendamment pour chaque projection $P_A$ tel que décrit précédemment, c'est-à-dire pour chaque angle de mesure A considéré. Préférentiellement, on calcule un même nombre NS de seuils quel que soit l'angle de mesure considéré.

Selon un mode de réalisation, on calcule les valeurs de seuils optimales pour l'ensemble des NA angles considérés, en prenant par exemple un des seuils estimés, ou bien la moyenne, la médiane, ou toutes autres combinaisons de tout ou partie des seuils obtenus pour chaque projection.

Selon un autre mode réalisation de la présente invention, on détermine les NS seuils d'intensité pour l'ensemble des angles de mesure en minimisant la fonction coût suivante :

$$F = \sum_{A=1}^{NA} \sum_{j=1}^{H} \left( P'_A(j) - P_A(j) \right)^2$$

c'est-à-dire que l'on détermine les NS valeurs de seuils pour l'ensemble des angles A considérés en résolvant un problème d'optimisation globale, couvrant tous les angles, et non pas en résolvant un problème d'optimisation angle par angle.

**3) Segmentation de l'image** I

Au cours de cette étape, on segmente l'image de l'objet reconstruit en regroupant les NI niveaux d'intensité de l'image en question en NS+1 classes délimitées par les NS seuils déterminés au cours de l'étape précédente. Ainsi, pour chaque maille (i,j) d'une image d'un objet, on recherche à quelle classe la maille considérée appartient, en fonction des valeurs des seuils déterminées à l'étape précédente.

Selon un mode de mise en oeuvre de la présente invention, on attribue à chaque maille une intensité représentative de la classe à laquelle elle appartient. L'intensité représentative en question peut être la moyenne des seuils délimitant ladite classe, ou bien encore l'un desdits seuils, ou encore toute combinaison desdits seuils.

Selon un mode de réalisation de la présente invention, on attribue à chaque classe d'intensité les valeurs $c_1$ à $c_{N+1}$ des intensités représentatives des NS+1 classes déterminées selon un mode de réalisation de l'étape précédente. Par exemple, dans le cas où NS=1, si l'élément I(i,j) a une valeur inférieure à une valeur de seuil d'intensité $s_1$, alors on attribue à I(i,j) la valeur de l'intensité représentative $c_1^*$. Et dans le cas de NS=2, si $s_1 < I(i,j) < s_2$, alors on attribue à I(i,j) la valeur de l'intensité représentative $c_2^*$. On obtient ainsi une image segmentée en NS+1 classes d'intensité, et caractérisée par des valeurs d'intensité appartenant à l'ensemble $\{c_1^*, \ldots, c_n^*, \ldots, c_{NS+1}^*\}$.

En outre, l'invention concerne un produit programme d'ordinateur téléchargeable depuis un réseau de communication et/ou enregistré sur un support lisible par ordinateur et/ou exécutable par un processeur, dans lequel il comprend des instructions de code de programme pour la mise en oeuvre du procédé selon l'une quelconque des revendications précédentes, lorsque ledit programme est exécuté sur un ordinateur

**Utilisation de l'invention**

L'invention concerne également l'utilisation du procédé selon l'invention pour la caractérisation des supports de catalyseurs dans le domaine du raffinage pétrochimique. En effet, la segmentation de l'image d'un support de catalyseur obtenue selon l'invention peut contribuer à mieux caractériser les spécificités physico-chimiques des matériaux constitutifs dudit support.

L'invention peut également concerner l'utilisation du procédé selon l'invention dans le domaine de l'exploration et de l'exploitation pétrolière, pour la caractérisation des milieux poreux. En effet, la segmentation de l'image d'un échantillon de roche, provenant par exemple d'une roche réservoir d'un champ pétrolier, peut contribuer à une meilleure caractérisation de cet échantillon de roche (meilleure connaissance de sa porosité, de sa perméabilité, etc), et par conséquent peut contribuer à améliorer l'exploitation du champ pétrolier étudié.

L'invention peut également concerner l'utilisation du procédé selon l'invention pour la caractérisation de matériaux quelconques, pour le contrôle non destructif d'un objet ou encore pour l'imagerie médicale.

**Exemple d'application**

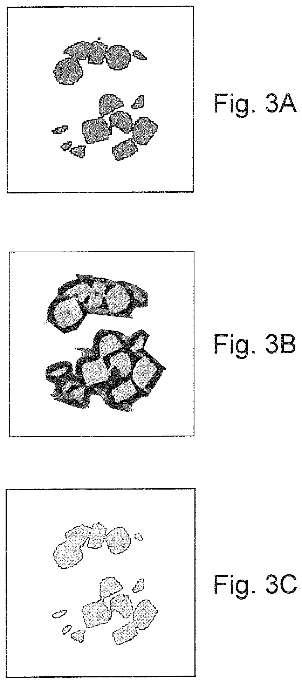

La présente invention est appliquée à un objet synthétique (c'est-à-dire à un objet pour lequel on connaît la solution exacte d'une segmentation) comportant deux niveaux d'intensité (Figure 3A). La Figure 3B présente l'image I reconstruite à l'aide de la méthode de reconstruction tomographique SIRT, connue du spécialiste et décrite dans [Gilbert, 1972], à partir de 140 projections P de l'objet étudié, obtenues pour des angles variant entre 0° et 139° par pas de 1°. L'image reconstruite présente 255 niveaux d'intensité. On peut observer des imperfections sur cette image (effet flou), du fait de la reconstruction d'un objet à partir d'un nombre restreint d'informations sur cet objet. La Figure 3C présente le résultat du procédé selon l'invention appliqué à l'image I et mis en oeuvre dans le cas d'un seul seuil d'intensité. On observe que le résultat du procédé selon l'invention conduit bien à la simplification de l'image étudiée en deux classes bien distinctes. Ainsi, le procédé selon l'invention appliqué à cet exemple permet de corriger le défaut de résolution de l'image reconstruite (Figure 3B), l'image simplifiée (Figure 3C) étant plus proche de l'objet à retrouver (Figure 3A).

Ainsi, le procédé selon l'invention permet une détermination automatique et rapide des valeurs de seuils d'intensité optimaux, et ainsi de simplifier de façon fiable l'image d'un objet obtenu par reconstruction tridimensionnelle. La présente invention permet d'accélérer l'étape de segmentation par minimisation de la distance aux projections par un pré-calcul effectué sur l'image de l'objet reconstruit, supprimant ainsi les calculs de projections simulées pour chaque combinaison de seuils testée, puis propose une méthode utilisant ce pré-calcul pour calculer de manière optimale des valeurs de seuils.

**Revendications**

1.  Procédé pour la segmentation d'une image d'un objet représentée par un nombre fini de niveaux d'intensité, ladite image étant une image tomographique ayant été reconstruite à partir de mesures externes à l'objet et acquises selon différents angles pris par rapport à une référence, **caractérisé en ce qu'**on réalise, à partir d'un nombre prédéfini de seuils d'intensité de ladite image, les étapes suivantes pour au moins un desdits angles :

    a) on détermine, pour ledit angle, une distribution représentative de la répartition desdits niveaux d'intensités de ladite image, ladite distribution étant un histogramme cumulé desdits niveaux d'intensités rencontrés dans ladite image selon une direction prédéterminée dans ladite image, ladite direction prédéterminée étant la même pour chacun desdits angles ;
    b) on détermine les valeurs desdits seuils d'intensité en minimisant une fonction objectif estimant la différence entre ladite mesure pour ledit angle et une mesure simulée pour ledit même angle, ladite mesure simulée étant fonction desdites valeurs desdits seuils et de ladite distribution ;
    c) on segmente ladite image par regroupement desdits niveaux d'intensité en classes d'intensité délimitées par lesdites valeurs desdits seuils.

2.  Procédé selon la revendication précédente, dans lequel ladite direction prédéterminée est une droite parallèle à l'un des axes horizontaux de ladite image.

3.  Procédé selon l'une des revendications précédentes, dans lequel lesdites mesures ont été acquises dans le cadre d'une géométrie d'acquisition parallèle et dans lequel ledit histogramme cumulé est déterminé sur une rotation de ladite image selon ledit angle.

4.  Procédé selon l'une des revendications précédentes, dans lequel on calcule ladite mesure simulée $P'_A$ pour un desdits angles A selon une formule du type :

$$P'_A \ = \ f(\,T_A(\mathrm{s}_1), ... , T_A(\mathrm{s}_n), ... , T_A(\mathrm{s}_{NS}))$$

où $f$ est une combinaison linéaire, NS est ledit nombre prédéfini desdits seuils d'intensité, et $T_A(s_n)$ est l'ensemble des éléments dudit histogramme cumulé représentatifs du nombre desdits niveaux d'intensité de ladite image inférieurs à une valeur de seuil $s_n$, ledit histogramme étant calculé pour ledit angle A.

5.  Procédé selon l'une des revendications précédentes, dans lequel on détermine une intensité représentative pour chacune desdites classes délimitées par lesdites valeurs desdits seuils.

6.  Procédé la revendication 5, dans lequel ladite intensité représentative de ladite classe est la valeur d'un desdits seuils délimitant ladite classe, une moyenne desdites valeurs desdits seuils délimitant ladite classe, ou toute combinaison linéaire desdites valeurs desdits seuils délimitant ladite classe.

7.  Procédé selon l'une des revendications précédentes, dans lequel on applique les étapes a) et b) pour chacun desdits angles de mesure et on détermine des valeurs de seuils représentatives de l'ensemble desdits angles en choisissant soit la médiane, soit une combinaison desdites valeurs desdits seuils déterminés pour chacun desdits angles de mesure.

8.  Procédé selon l'une des revendications précédentes, dans lequel on détermine des valeurs de seuils représentatives de l'ensemble desdits angles de mesure en minimisant une fonction objectif estimant les différences entre lesdites mesures et lesdites mesures simulées pour l'ensemble desdits angles de mesure.

9.  Utilisation du procédé selon l'une des revendications 1 à 8 pour la caractérisation des supports de catalyseurs dans le domaine du raffinage pétrochimique.

10. Utilisation du procédé selon l'une des revendications 1 à 8 pour la caractérisation des milieux poreux dans le domaine de l'exploration et de l'exploitation pétrolière.

11. Utilisation selon l'une des revendications 1 à 8 pour la caractérisation de matériaux, pour le contrôle non destructif d'un objet, ou pour l'imagerie médicale.

12. Produit programme d'ordinateur téléchargeable depuis un réseau de communication ou enregistré sur un support lisible par ordinateur, et exécutable par un processeur, comprenant des instructions de code de programme pour la mise en oeuvre du procédé selon l'une des revendications 1 à 8, lorsque ledit programme est exécuté sur un ordinateur.

**Patentansprüche**

1.  Verfahren zur Segmentierung eines Bildes eines Objekts, das durch eine endliche Anzahl von Intensitätsebenen dargestellt ist, wobei das Bild ein tomografisches Bild ist, das auf Basis von Messungen rekonstruiert wird, die extern zum Bild sind und nach verschiedenen Winkeln in Bezug zu einem Bezugspunkt erfasst wurden, **dadurch gekennzeichnet, dass** auf Basis einer vordefinierten Anzahl von Intensitätsgrenzen des Bildes die folgenden Schritte für mindestens einen der Winkel durchgeführt werden:

    a) für den Winkel Bestimmung einer Verteilung, die für die Aufteilung der Intensitätsniveaus des Bildes repräsentativ ist, wobei die Verteilung ein kumuliertes Histogramm der Intensitätsniveaus ist, die in dem Bild in eine vorbestimmte Richtung in dem Bild anzutreffen sind, wobei die vorbestimmte Richtung für jeden der Winkel dieselbe ist;
    b) Bestimmung der Werte der Intensitätsgrenzen, wobei eine objektive Funktion, die die Differenz zwischen der Messung für den Winkel und einer simulierten Messung für denselben Winkel schätzt, minimiert wird, wobei die simulierte Messung von den Werten der Grenzen oder der Verteilung abhängt;
    c) Segmentierung des Bildes durch Gruppierung der Intensitätsniveaus in Intensitätsklassen, die von den Werten der Grenzen begrenzt sind.

2.  Verfahren nach dem vorhergehenden Anspruch, bei dem die vorbestimmte Richtung eine Gerade parallel zu einer der Horizontalachsen des Bildes ist.

3.  Verfahren nach einem der vorhergehenden Ansprüche, bei dem die Messungen im Rahmen einer parallelen Erfassungsgeometrie erfasst wurden, und bei dem das kumulierte Histogramm an einer Rotation des Bildes in dem Winkel bestimmt wird.

4.  Verfahren nach einem der vorhergehenden Ansprüche, bei dem die simulierte Messung P'A für einen der Winkel A nach einer Formel folgenden Typs berechnet wird:

$$P'_A = f(T_A(s_1), \ldots, T_A(s_n), \ldots, T_A(s_{NS}))$$

wobei f eine lineare Kombination ist, NS die vordefinierte Anzahl der Intensitätsgrenzen und $T_A(s_n)$ die Gesamtheit der Elemente des kumulierten Histogramms, die für die Anzahl der Intensitätsniveaus des Bildes unter einem Grenzwert $s_n$ repräsentativ sind, ist, wobei das Histogramm für den Winkel A berechnet wird.

5.  Verfahren nach einem der vorhergehenden Ansprüche, bei dem eine Intensität bestimmt wird, die für jede der Klassen, die durch die Werte der Grenzen begrenzt sind, repräsentativ ist.

6.  Verfahren nach Anspruch 5, bei dem die Intensität, die für die Klasse repräsentativ ist, der Wert einer der die Klasse begrenzenden Grenzen ist, wobei ein Durchschnitt der Werte der Grenzen die Klasse begrenzt, oder wobei jede lineare Kombination der Werte der Grenzen die Klasse begrenzt.

7.  Verfahren nach einem der vorhergehenden Ansprüche, bei dem die Schritte a) und b) für jeden der Messwinkel

**13**

angewandt werden, und Werte von Grenzen bestimmt werden, die für die Gesamtheit der Winkel repräsentativ sind, wobei entweder die Mitte oder eine Kombination der Werte der für jeden der Messwinkel bestimmten Grenzen gewählt wird.

**8.** Verfahren nach einem der vorhergehenden Ansprüche, bei dem Werte von Grenzen bestimmt werden, die für die Gesamtheit der Messwinkel repräsentativ sind, wobei eine objektive Funktion minimiert wird, die die Differenzen zwischen den Messungen und den simulierten Messungen für die Gesamtheit der Messwinkel schätzt.

**9.** Verwendung des Verfahrens nach einem der Ansprüche 1 bis 8 zur Kennzeichnung der Katalysatorträger auf dem Gebiet der Erdölexploration und -gewinnung.

**10.** Verwendung des Verfahrens nach einem der Ansprüche 1 bis 8 zur Charakterisierung des Porenmilieus auf dem Gebiet der Erdölexploration und -gewinnung.

**11.** Verwendung nach einem der Ansprüche 1 bis 8 zur Charakterisierung von Materialien für die nicht zerstörende Kontrolle eines Objekts oder für die medizinische Bildgebung.

**12.** Computerprogrammprodukt, das von einem Kommunikationsnetz herunterladbar oder auf einem computerlesbaren Träger aufgezeichnet ist, umfassend Programmcodeanweisungen für den Einsatz des Verfahrens nach einem der Ansprüche 1 bis 8, wenn das Programm auf einem Computer ausgeführt wird.

**Claims**

**1.** A method for segmenting an image of an object represented by a finite number of intensity levels, said image being a tomographic image that has been reconstructed from measurements external to the object and acquired at different angles with respect to a reference, **characterized in that** the following steps are carried out from a predetermined number of intensity thresholds of said image, for at least one of said angles:

a) determining, for said angle, a distribution representative of the distribution of said intensity levels of said image, said distribution being a cumulative histogram of said intensity levels encountered in said image along a predetermined direction in said image, said predetermined direction being the same for each one of said angles, b) determining the values of said intensity thresholds by minimizing an objective function estimating the difference between said measurement for said angle and a simulated measurement for said same angle, said simulated measurement being a function of said values of said thresholds and of said distribution, c) segmenting said image by grouping said intensity levels into intensity classes delimited by said values of said thresholds.

**2.** A method as claimed in the previous claim, wherein said predetermined direction is a line parallel to one of the horizontal axes of said image.

**3.** A method as claimed in any one of the previous claims, wherein said measurements are acquired within the context of a parallel acquisition geometry and wherein said cumulative histogram is determined on a rotation of said image by said angle.

**4.** A method as claimed in any one of the previous claims, wherein said simulated measurement $P'_A$ is calculated for one of said angles A with a formula of the type:

$$P'_A = f\big(T_A(s_1), \dots, T_A(s_n), \dots, T_A(s_{NS})\big)$$

where $f$ is a linear combination, NS is said predetermined number of said intensity thresholds and $T_A(s_n)$ is all the elements of said cumulative histogram representative of the number of said intensity levels of said image that are less than a threshold value $s_n$, said histogram being calculated for said angle A.

**5.** A method as claimed in any one of the previous claims, wherein a representative intensity is determined for each one of said classes delimited by said values of said thresholds.

**6.** A method as claimed in claim 5, wherein said intensity representative of said class is the value of one of said thresholds delimiting said class, an average of said values of said thresholds delimiting said class or any linear combination of said values of said thresholds delimiting said class.

**7.** A method as claimed in any one of the previous claims, wherein steps a) and b) are applied for each one of said angles of measurement and wherein threshold values representative of all of said angles are determined by selecting either the median or a combination of said values of said thresholds determined for each one of said angles of measurement.

**8.** A method as claimed in any one of the previous claims, wherein threshold values representative of all of said angles of measurement are determined by minimizing an objective function estimating the differences between said measurements and said simulated measurements for all of said angles of measurement.

**9.** Use of the method as claimed in any one of claims 1 to 8 for characterizing catalyst supports in the field of petrochemical refining.

**10.** Use of the method as claimed in any one of claims 1 to 8 for characterizing porous media in the field of oil exploration and development.

**11.** Use of the method as claimed in any one of claims 1 to 8 for materials characterization, for non-destructive testing of an object or for medical imaging.

**12.** A computer program product downloadable from a communication network or recorded on a computer readable medium and processor executable, comprising program code instructions for implementing the method as claimed in any one of claims 1 to 8 when said program is executed on a computer.

FIG. 1

Fig. 2A

Fig. 2B

Fig. 2C

Fig. 2D

Fig. 2E

Fig. 2F

Fig. 3A

Fig. 3B

Fig. 3C

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **K. J. BATENBURG ; J. SIJBERS.** Optimal threshold selection for tomogram segmentation by reprojection of the reconstructed image. *Computer Analysis of Images and Patterns*
- Lecture Notes in Computer Science. Springer, 2007, vol. 4673, 563-570
- **K.J. BATENBURG ; J. SIJBERS.** Adaptive thresholding of tomograms by projection distance minimization. *Pattern Récognition,* 2009, vol. 42 (10), 2297-2305
- **HONG DOAN DINH ; PIERRE DELAGE ; JEAN-FRANÇOIS NAUROY ; ANH-MINH TANG ; YOUSSEF SOUHAIL.** Microstructural characterization of a Canadian oil sand. *Canadian Geotechnical Journal,* Janvier 2013, vol. 49 (10
- **GILBERT P.** Iterative methods for the three-dimensional reconstruction of an object from projections. *Journal of Theorical Biology,* vol. 36 (1), 105-117
- **L.K. HUANG ; M.J. WANG.** Image thresholding by minimizing the measure of fuzziness. *Pattern Récognition,* 1995, 41-51
- **J.N. KAPUR ; P.K. SAHOO ; A.K.C. WONG.** A new method for gray-level picture thresholding using the entropy of the histogram. *Computer Vision, Graphics, and Image Processing,* 1985, vol. 29 (3), 273-285
- **LEI HE ; ZHIGANG PENG ; BRYAN EVERDING ; XUN WANG ; CHIA Y. HAN ; KENNETH L. WEISS ; WILLIAM G. WEE.** A comparative study of deformable contour methods on medical image segmentation. *Image and Vision Computing,* 01 Février 2008, vol. 26 (2), 141-163

- **NIHAD MESANOVIS ; HARIS HUSEINAGIC ; SAMIR KAMENJAKOVIC.** Automatic Region Based Segmentation and Analysis of Lung Volumes from CT Images. *International Journal of Computer Science and Technology,* 2013, vol. 4
- **M. MOREAUD ; B. CELSE ; F. TIHAY.** Analysis of the accessibility of macroporous alumino-silicate using 3D-TEM images. *Material Science and Technology 2008 conference*
- **N. OTSU.** A threshold selection method from gray level histograms. *IEEE Trans. Systems, Man and Cybernetics,* 1979, vol. 9, 62-66
- **JEAN STAWIASKI.** Morphologie mathématique et graphes : application à la segmentation interactive d'images médicales. Ecole des Mines de Paris, 2008
- Inverse problem approach for the alignment of electron tomographic series. **VD TRAN ; M MOREAUD ; É THIÉBAUT ; L DENIS ; JM BECKER.** Oil & Gas Science and Technology-Revue. IFP Energies nouvelles, vol. 69, 279-291
- **V.D. TRAN.** Reconsutrction et segmentation d'image 3D de tomographie électronique. Université de Saint Etienne, 2013
- **L. XU ; M.I. JORDAN.** On Convergence Properties of the EM Algorithm for Gaussian Mixture. *Neural Computation,* 1996, vol. 8, 129-151